# EUROPÄISCHE PATENTSCHRIFT

(11) **EP 2 473 403 B1**
(45) Veröffentlichungstag und Bekanntmachung des Hinweises auf die Patenterteilung: **17.05.2017**
(21) Anmeldenummer: 10752524.8
(22) Anmeldetag: 03.09.2010
(51) Int. Cl.: B64C 9/04, B64C 9/16, B64C 9/18

(54) **VERSTELLMECHANISMUS ZUR KINEMATISCHEN VERSTELLUNG EINES HOCHAUFTRIEBSKÖRPERS SOWIE HOCHAUFTRIEBSSYSTEM MIT EINEM SOLCHEN VERSTELLMECHANISMUS**
ADJUSTING MECHANISM FOR KINEMATICALLY ADJUSTING A HIGH-LIFT DEVICE AND HIGH-LIFT SYSTEM COMPRISING SAID TYPE OF ADJUSTING MECHANISM
MÉCANISME DE DÉPLACEMENT POUR LE DÉPLACEMENT CINÉMATIQUE D'UN DISPOSITIF HYPERSUSTENTATEUR ET SYSTÈME HYPERSUSTENTATEUR POURVU D'UN TEL MÉCANISME DE DÉPLACEMENT

(30) Priorität: 03.09.2009 DE 102009039967; 03.09.2009 US 239525 P
(43) Veröffentlichungstag der Anmeldung: 11.07.2012
(73) Patentinhaber: Airbus Operations GmbH, 21129 Hamburg (DE)
(72) Erfinder: EICHHORN, Jochen, 67468 Neidenfels (DE); DOSTMANN, Tom, 09439 Amtsberg-Dittersdorf (DE); SCHLIPF, Bernhard, 28201 Bremen (DE)
(74) Vertreter: Bird & Bird LLP
(86) Internationale Anmeldenummer: PCT/EP2010/005436
(87) Internationale Veröffentlichungsnummer: WO 2011/026639

(56) Entgegenhaltungen:
- EP-A1- 0 154 047
- US-A- 2 608 364

## Beschreibung

Die Erfindung betrifft einen Verstellmechanismus zur kinematischen Verstellung eines Hochauftriebskörpers sowie ein Hochauftriebssystem mit einem solchen Verstellmechanismus.

Aus der EP 0154047 A1, die als nächstliegender Stand der Technik angesehen wird, ist ein Verstellmechanismus zur Verstellung einer Hinterkantenklappe bekannt, der einen von einem Drehaktuator verstellbaren Kopplungsträger aufweist, an dem die Hinterkantenklappe angelenkt ist. Zur Führung des Kopplungsträgers und somit zur Führung der Hinterkantenklappe ist an dem Kopplungsträger zum einen ein Verbindungshebel zur gelenkigen Verbindung des Kopplungsträger mit dem Hauptflügel und zum anderen ein Verbindungshebel zur gelenkigen Verbindung des Kopplungsträger mit der Hinterkantenklappe angelenkt. Aufgabe der Erfindung ist, einen Verstellmechanismus zur kinematischen Verstellung eines Hochauftriebskörpers sowie ein Hochauftriebssystem mit einem solchen Verstellmechanismus bereitzustellen, der einfach gebaut ist und dabei in den verschiedenen Verstellzuständen einen relativ geringen Einbauraum benötigt und bei der Verstellung einen eine relativ große translatorische Bewegung bei der Ausführung einer Drehbewegung des angekoppelten Hochauftriebskörpers ausführt.

Diese Aufgabe wird mit den Merkmalen der unabhängigen Patentansprüche gelöst. Weitere Ausführungsformen sind in den auf diese rückbezogenen Unteransprüchen angegeben.

Eine nicht beansprucht Lösung bezieht sich in einem ersten Aspekt auch auf einen Verstellmechanismus zur kinematischen Führung eines Verstellkörpers. Der Verstellkörper kann insbesondere ein Verschlussdeckel wie z.B. ein Kofferraum-Deckel eines Kraftfahrzeugs, ein aufklappbares und einfahrbares (Cabrio-)Dach oder Verdeck eines Kraftfahrzeugs oder eine andere klappbare Abdeckung sein, bei dem die erfindungsgemäße Aufgabe zu lösen ist.

Nach diesem Aspekt ist ein Verstellmechanismus zur kinematischen Führung eines Verstellkörpers bei dessen Verstellung an einem tragenden Strukturteil vorgesehen, wobei der Verstellkörper zwischen einer eingefahrenen und einer ausgefahrenen Stellung unter Ausführung einer Bewegung in einer Längsrichtung in Kombination mit einer Drehbewegung bewegbar ist, der Verstellmechanismus aufweisend:
▪ einen ersten Übertragungshebel zur Ankopplung an dem tragenden Strukturteil und einen in der Längsrichtung gesehen hinter dem ersten Hebel und dem Verstellkörper gelegenen zweiten Übertragungshebel zur Ankopplung an dem tragenden Strukturteil,
▪ einen Basis-Verbindungshebel, an der erste Übertragungshebel und der zweite Übertragungshebel angekoppelt sind,
▪ einen an dem Basis-Verbindungshebel angekoppelten dritten Übertragungshebel und einen in der Längsrichtung gesehen hinter dem dritten Hebel gelegenen und an dem Basis-Verbindungshebel angekoppelten vierten Übertragungshebel,
▪ einen an dem dritten Hebel und dem vierten Hebel angekoppelten Stellhebel zur Anbringung des Verstellkörpers, um mit einer Bewegung des Stellhebels den Verstellkörper zu verstellen,
▪ einen Kopplungshebel, der einerseits an dem ersten Übertragungshebel oder dem zweiten Übertragungshebel und andererseits an dem dritten Übertragungshebel oder dem vierten Übertragungshebel angekoppelt ist, wobei die Anschlussstellen des Kopplungshebels und des Basis-Verbindungshebel an dem ersten Übertragungshebel oder dem zweiten Übertragungshebel voneinander beabstandet sind und die Anschlussstellen des Kopplungshebels und des Basis-Verbindungshebel an dem dritten Übertragungshebel oder dem vierten Übertragungshebel voneinander beabstandet sind, wodurch der Kopplungshebel die Drehbewegung des ersten Übertragungshebels oder des zweiten Übertragungshebels mit der Drehbewegung des dritten Übertragungshebels oder des vierten Übertragungshebels koppelt.

Weiterhin ist die Orientierung des ersten, zweiten, dritten und vierten Übertragungshebels derart vorgesehen, dass sich bei einer Bewegung des Stellhebels der erste und der zweite Übertragungshebel jeweils gegensinnig zu dem dritten und vierten Übertragungshebel bewegt.

Je nach Anwendungsfall kann vorgesehen sein, dass der Stellhebel Teil des Verstellkörpers ist, d.h. starr an diesem befestigt ist. Dabei ist der Stellhebel ein Strukturteil des Verstellkörpers und kann insbesondere ein tragendes Strukturteil des Verstellkörpers sein. Alternativ kann vorgesehen sein, dass der Stellhebel an dem Verstellkörper angelenkt ist.

Durch die nicht beanspruchte Lösung wird ein Verstellmechanismus zur kinematischen Führung eines Verstellkörpers bei dessen Verstellung an einem tragenden Strukturteil bereit gestellt, mit dem ein großer Verfahrweg des Stellhebels oder der jeweiligen Kopplungsstelle des Verstellkörpers an dem Verstellmechanismus bei kleinem Einbauraum des Verstellmechanismus erreicht wird.

Der dritte Übertragungshebel kann in der Längsrichtung gesehen hinter dem zweiten Übertragungshebel oder an demselben Lager an dem Basis-Verbindungshebel gelagert sein. Auch kann der vierte Übertragungshebel in der Längsrichtung gesehen hinter dem dritten Übertragungshebel an dem Basis-Verbindungshebel gelagert sein. Dabei kann insbesondere vorgesehen sein, dass der zweite Übertragungshebel und der dritte Übertragungshebel an dem Basis-Verbindungshebel in derselben Lagerstelle gelagert sind.

Weiterhin kann vorgesehen sein, dass der dritte Übertragungshebel in der Längsrichtung gesehen hinter dem ersten Übertragungshebel und vor dem zweiten Übertragungshebel oder vor dem ersten Übertragungshebel an dem Basis-Verbindungshebel gelagert sein. Zusätzlich kann vorgesehen sein, dass der vierte Übertragungshebel in der Längsrichtung gesehen vor oder hinter dem zweiten Übertragungshebel an dem Basis-Verbindungshebel gelagert ist. Erfindungsgemäß ist ein Verstellmechanismus für eine Verstellklappe und insbesondere ein Hochauftriebssystem eines Flugzeugs vorgesehen. Dabei ist der Verstellmechanismus zur kinematischen Verstellung eines Hochauftriebskörpers bei dessen Verstellung an einem Hauptflügel vorgesehen, wobei der Hochauftriebskörper zwischen einer eingefahrenen und einer ausgefahrenen Stellung unter Ausführung einer Bewegung entlang einer Längsrichtung in Kombination mit einer Drehbewegung bewegbar ist. Der Verstellmechanismus weist dabei insbesondere auf:
▪ einen ersten Übertragungshebel zur Ankopplung an dem Hauptflügel und einen in der Längsrichtung gesehen hinter dem ersten Hebel und dem Hochauftriebskörper gelegenen zweiten Übertragungshebel zur Ankopplung an dem tragenden Strukturteil,
▪ einen Basis-Verbindungshebel, an dem erste Übertragungshebel und der zweite Übertragungshebel angekoppelt ist,
▪ einen an dem Basis-Verbindungshebel angekoppelten dritten Übertragungshebel und einen in der Längsrichtung gesehen hinter dem dritten Hebel gelegenen und an dem Basis-Verbindungshebel angekoppelten vierten Übertragungshebel,
▪ einen an dem dritten Hebel und dem vierten Hebel angekoppelten Stellhebel zur Anbringung des Hochauftriebskörpers, um mit einer Bewegung des Stellhebels den Hochauftriebskörper zu verstellen,
▪ einen Kopplungshebel, der einerseits an dem ersten Übertragungshebel oder dem zweiten Übertragungshebel und andererseits an dem dritten Übertragungshebel oder dem vierten Übertragungshebel angekoppelt ist, wobei die Anschlussstellen des Kopplungshebels und des Basis-Verbindungshebel an dem ersten Übertragungshebel oder dem zweiten Übertragungshebel voneinander beabstandet sind und die Anschlussstellen des Kopplungshebels und des Basis-Verbindungshebel an dem dritten Übertragungshebel oder dem vierten Übertragungshebel voneinander beabstandet sind, wodurch der Kopplungshebel die Drehbewegung des ersten Übertragungshebels oder des zweiten Übertragungshebels mit der Drehbewegung des dritten Übertragungshebels oder des vierten Übertragungshebels koppelt,
▪ eine Antriebsvorrichtung zur Betätigung des Hochauftriebskörpers mit einem Antriebshebel, der über ein sphärisches Lager an dem Hochauftriebskörper angekoppelt ist,
wobei die Orientierung des ersten, zweiten, dritten und vierten Übertragungshebels derart vorgesehen ist, dass sich bei einer Bewegung des Stellhebels der erste und der zweite Übertragungshebel jeweils gegensinnig zu dem dritten und vierten Übertragungshebel bewegt.

Dabei kann insbesondere vorgesehen sein, dass der zweite Übertragungshebel und der dritte Übertragungshebel an dem Basis-Verbindungshebel in derselben Lagerstelle gelagert sind. Der dritte Übertragungshebel kann generell in der Längsrichtung gesehen hinter dem zweiten Übertragungshebel oder an demselben Lager an dem Basis-Verbindungshebel gelagert sein. Auch kann der vierte Übertragungshebel in der Längsrichtung gesehen hinter dem dritten Übertragungshebel an dem Basis-Verbindungshebel gelagert sein.

Generell kann vorgesehen sein, dass der Hochauftriebskörper eine Hinterkantenklappe oder eine Vorderkantenklappe ist.

Der erfindungsgemäße Verstellmechanismus ist insbesondere durch die Realisierung von Koppelgetrieben (Linkages) zur Realisierung von konturintegrierten Klappenführungs- oder Klappenverstell-Mechanismen eines Flugzeugs geeignet. Die Rahmenbedingungen bei der Realisierung eines Hochauftriebssystems eines Flugzeugs sind hierbei besonders anspruchsvoll: Durch den geforderten weiten Fowlerweg der Klappe werden für das Erreichen der Landestellung lange Koppelglieder (Links) benötigt. Der erfindungsgemäße Verstell- oder Führungsmechanismus löst diese Problematik mit gekoppelten Getriebestufen, wobei zwei Vier-Hebel-Anordnungen miteinander gekoppelt werden. Dadurch wird das Auftreten der Lastenmultiplikation durch das Entstehen ungünstiger Winkelstellungen der Bauteile zueinander vermieden. Weiterhin lassen sich hierdurch die Lasten auf die Gleitlager erheblich reduzieren. Gleichzeitig werden größere Fowlerwege bei vergleichsweise geringem Bauteilausschlag erzielt.

Die erfindungsgemäße Lösung mit der Zweifach-Vier-Hebel-Anordnung kann der Verstellmechanismus-Linkage sehr platzsparend realisiert werden. Bei Flugzeugtypen mit geringerer Hochauftriebsleistung, Fowlerweg und Klappentiefe kann die erfindungsgemäße Lösung vorteilhaft angewendet werden. Die Verbindung von Hebeln und Ankopplung derselben kann mittels einer entsprechenden Gleitlagertechnik realisiert werden.

Der erfindungsgemäße Verstellmechanismus kann - wegen des geringen Raum-Erfordernisses - vollständig in die Flügelkontur integriert werden. Weiterhin ist der erfindungsgemäße Verstellmechanismus einfach montierbar. Auch ist vorteilhaft, dass die einzelnen Hebel nach der Erfindung als einfache Bauteile und z.B. als einfache Frästeile realisiert werden, so dass erfindungsgemäße Verstellmechanismus ins gesamt kostengünstig und einfach realisierbar ist.

Um das Konzept effizient optimieren zu können, ist die Verwendung numerischer Methoden sehr sinnvoll. Dadurch ließe sich der erfindungsgemäße Verstellmechanismus oder das Koppelgetriebe auf eine günstige Kraftverteilung auslegen.

Die eine Antriebsvorrichtung zur Betätigung des Hochauftriebskörpers kann ein Drehaktuator sein, der am Hauptflügel angebracht ist und dessen Schwenkhebel an dem Hochauftriebskörper zur Betätigung des Hochauftriebskörpers angekoppelt ist. Dabei kann der Schwenkhebel über einen Anschlusshebel an dem Hochauftriebskörper angekoppelt sein.

Nach einem Ausführungsbeispiel der Erfindung ist der dritte Übertragungshebel in der Längsrichtung gesehen hinter dem ersten Übertragungshebel und vor dem zweiten Übertragungshebel oder vor dem ersten Übertragungshebel an dem Basis-Verbindungshebel gelagert. Zusätzlich kann vorgesehen sein, dass der vierte Übertragungshebel in der Längsrichtung gesehen vor oder hinter dem zweiten Übertragungshebel an dem Basis-Verbindungshebel gelagert ist.

Nach einem weiteren Aspekt der Erfindung ist ein Hochauftriebssystem eines Flugzeugs mit einem Hauptflügel und mittels einem Verstellvorrichtung an diesem angeordneten und gegenüber diesem verstellbaren Hochauftriebskörpers vorgesehen, wobei die Verstellvorrichtung aus zwei in der Spannweitenrichtung des Hauptflügels voneinander beabstandeten Verstellmechanismen nach einer Ausführungsform der Erfindung gebildet ist.

Nach einem Ausführungsbeispiel des Hochauftriebssystems ist vorgesehen, dass bei einem der Verstellmechanismen der Stellhebel über ein sphärisches Drehgelenk an dem Hochauftriebskörper angekoppelt ist und dass bei dem zumindest einen weiteren Verstellmechanismus der Stellhebel über ein Drehgelenk mit einer festliegenden Drehachse am Hochauftriebskörper angelenkt ist. Dadurch ist es möglich, eine in Bezug auf die Freiheitsgrade der Lagerung des Hochauftriebskörpers an den Verstellmechanismen gegebene Überbestimmtheit dieser Lagerung in je nach Anwendungsfall geeigneter Weise zu reduzieren, so dass die durch die Verbindung des Hochauftriebskörpers aufgrund äußerer Kräfte auftretenden inneren Spannungen in demselben reduziert werden können.

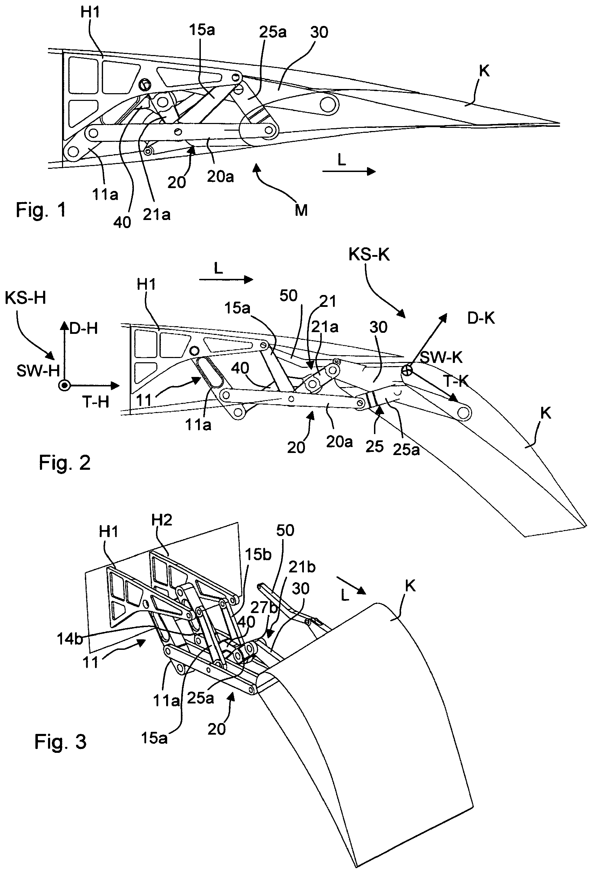

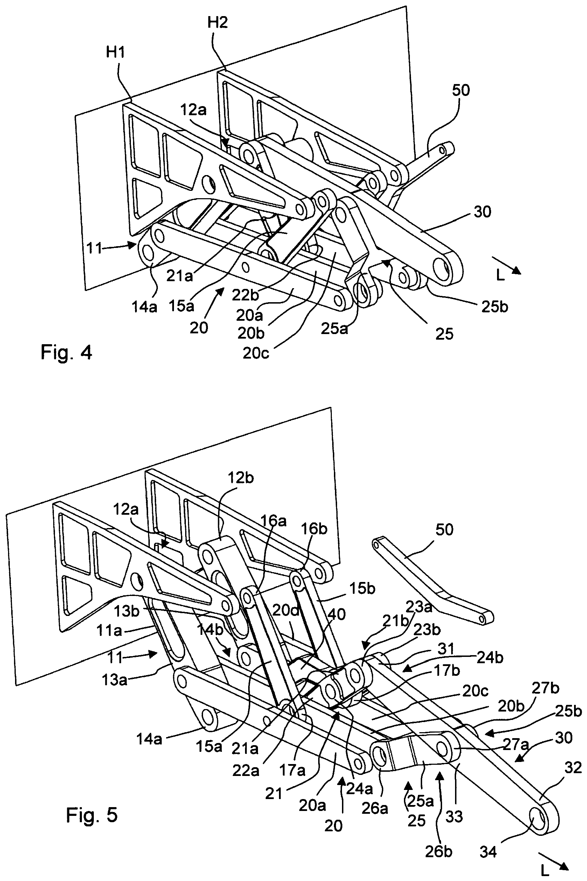

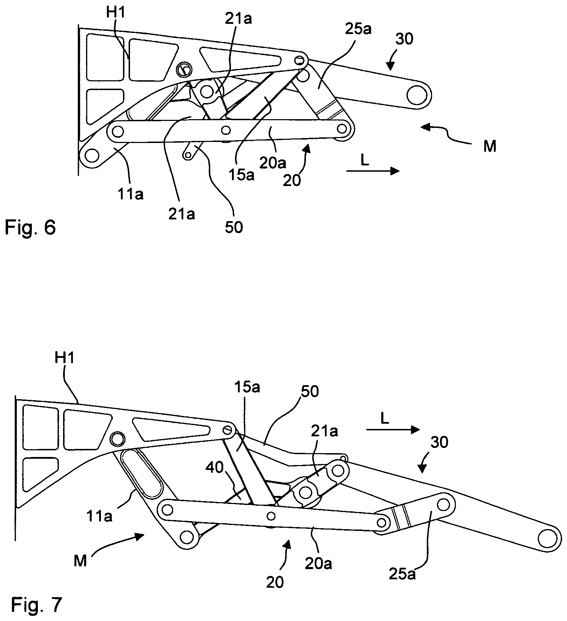

Im Folgenden werden Ausführungsbeispiele der Erfindung an Hand der beigefügten Figuren beschrieben, die zeigen:
▪ Figur 1 eine Seitenansicht eines Ausführungsbeispiels des erfindungsgemäßen Hochauftriebssystems mit einem Verstellmechanismus zur Verstellung einer an einem Strukturteil des Hauptflügels gegenüber diesem angekoppelten Hinterkantenklappe in einer ausgefahrenen Stellung, wobei die Hinterkantenklappe zur Veranschaulichung perspektivisch gezeichnet ist,
▪ Figur 2 eine Seitenansicht des in der Figur 1 dargestellten Ausführungsbeispiels des erfindungsgemäßen Hochauftriebssystems in einer ausgefahrenen Stellung,
▪ Figur 3 eine perspektivische Darstellung des in der Figur 1 dargestellten Ausführungsbeispiels des erfindungsgemäßen Hochauftriebssystems schräg von oben gesehen und in einer ausgefahrenen Stellung,
▪ Figur 4 eine perspektivische Darstellung des in den Figuren 1 bis 3 dargestellten Verstellmechanismus als solchen, d.h. ohne einem Strukturteil des Hauptflügels und einer Hinterkantenklappe, wobei der Verstellmechanismus in der eingefahrenen Stellung gezeigt ist,
▪ Figur 5 der in der Figur 4 gezeigte Verstellmechanismus als solcher in der perspektivischen Darstellung, wobei der Verstellmechanismus in der ausgefahrenen Stellung gezeigt ist,
▪ Figur 6 der in der Figur 4 gezeigte Verstellmechanismus als solcher in der Seitenansicht, wobei der Verstellmechanismus in der eingefahrenen Stellung gezeigt ist,
▪ Figur 7 der in der Figur 4 gezeigte Verstellmechanismus als solcher in der Seitenansicht, wobei der Verstellmechanismus in der ausgefahrenen Stellung gezeigt ist.

Die Figuren 1 bis 7 zeigen jeweils Ausführungsbeispiele des erfindungsgemäßen Verstellmechanismus in der Anwendung als Verstellmechanismus zur kinematischen Verstellung eines Hochauftriebskörpers K eines Flugzeugs bei dessen Verstellung an einem tragenden Strukturbauteil eines Hauptflügels H des Flugzeugs. Das Strukturbauteil ist in den Figuren in Form von zwei Trägern Strukturbauteil H1, H2 dargestellt. Der Hochauftriebskörper K kann insbesondere eine Hinterkantenklappe oder eine Vorderkantenklappe des Flugzeugs sein.

Der Hochauftriebskörper K ist zwischen einer eingefahrenen und einer ausgefahrenen Stellung unter Ausführung einer Bewegung entlang einer Längsrichtung L in Kombination mit einer Drehbewegung bewegbar. Zur Beschreibung eines Verstellmechanismus wird auf das z.B. in der Figur 2 eingetragene Hauptflügel-Koordinatensystem KS-H mit einer Flügel-Spannweitenrichtung SW-H, einer Flügel Tiefenrichtung T-H und einer Flügel-Dickenrichtung D-H sowie das Hochauftriebskörper-Koordinatensystem oder Klappen-Koordinatensystem KS-K mit einer Klappen-Spannweitenrichtung SW-K, einer Klappen-Tiefenrichtung T-K und einer Klappen-Dickenrichtung D-K. Die in Bezug auf den Verstellmechanismus M definierte Längsrichtung L verläuft entlang der Flügel Tiefenrichtung T-H und entlang der Klappen-Tiefenrichtung T-K zumindest im eingefahrenen Zustand des Hochauftriebskörpers K, wobei dessen Richtung vom Hauptflügel H zum Hochauftriebskörpers K gerichtet ist.

In den Figuren 1, 4 und 6 sind jeweils der Verstellmechanismus in einem Zustand gezeigt, bei dem sich der Hochauftriebskörper K in einer in Bezug auf den Hauptflügel H eingefahrenen Stellung befindet und in den Figuren 2, 3, 5 und 7 sind jeweils der Verstellmechanismus in einem Zustand gezeigt, bei dem sich der Hochauftriebskörper H1 in einer in Bezug auf den Hauptflügel H ausgefahrenen Stellung befindet.

Dabei weist der Verstellmechanismus M zwei erste Übertragungshebel 11a, 11 b auf, die mit einem ersten Endabschnitt 12a bzw. 12b jeweils an dem tragenden Strukturbauteil H1, H2 eines Hauptflügels H angelenkt sind. Weiterhin weist der Verstellmechanismus M zwei zweite Übertragungshebel 15a, 15b auf, die mit einem ersten Ende 16a bzw. 16b jeweils an dem tragenden Strukturbauteil H1, H2 eines Hauptflügels H angelenkt sind und die in der Längsrichtung L gesehen hinter dem ersten Übertragungshebel 11a, 11b gelegen sind.

Der Verstellmechanismus M weist eine Anordnung von Basis-Verbindungshebeln 20 auf, an der (welchen der) erste Übertragungshebel 11a, 11 b und der zweite Übertragungshebel 15a, 15b jeweils mit einem mittleren Abschnitt 13a, 13b bzw. einem zweiten Endabschnitt 17a, 17b angekoppelt sind. In dem in den Figuren dargestellten Ausführungsbeispiel sind vier Basis-Verbindungshebel 20 vorgesehen, von denen jeweils zwei Basis-Verbindungshebeln 20a, 20b und 20c, 20d an jeweils dem ersten Übertragungshebel 11a, 11 b bzw. dem zweiten Übertragungshebel 15a, 15b angekoppelt sind. Dabei sind von den jeweils zwei Basis-Verbindungshebeln 20a, 20b bzw. 20c, 20d auf jeweils zueinander entgegen gesetzt gelegenen Seiten der ersten Übertragungshebel 11 a, 11 b bzw. der zwei zweiten Übertragungshebel 15a, 15b angekoppelt.

Bei dem dargestellten Ausführungsbeispiel sind die zwei ersten Übertragungshebel 11a, 11b und die zwei zweiten Übertragungshebel 15a, 15b in der Flügel-Spannweitenrichtung SW-H gesehen hintereinander und parallel zueinander angeordnet. Dadurch ergibt sich eine symmetrische Kraft- und Spannungsverteilung in den einzelnen Hebeln und Komponenten des Verstellmechanismus M. Die Anzahl und Anordnung der ersten Übertragungshebel 11a, 11 b und der zweiten Übertragungshebel 15a, 15b hängt vom Anwendungsfall ab. In einer alternativen Ausführungsform kann der Verstellmechanismus M auch mit nur jeweils einem ersten Übertragungshebel 11a, 11 b und die zwei zweiten Übertragungshebel 15a, 15b sowie entsprechen(d) auch nur einem Basis-Verbindungshebel 20 gebildet sein.

An dem Basis-Verbindungshebel 20 sind zwei dritte Übertragungshebel 21a, 21b und zwei vierte Übertragungshebel 25a, 25b angekoppelt. In dem dargestellten Ausführungsbeispiel sind die dritten Übertragungshebel 21 a, 21 b mit jeweils einem ersten Endabschnitt 22a bzw. 22b und sind die vierten Übertragungshebel 15a, 15b mit jeweils ersten Endabschnitt 26a bzw. 26b an jeweils zwei Basis-Verbindungshebeln 20a, 20b bzw. 20c, 20d angekoppelt. Bei dem dargestellten Ausführungsbeispiel sind die dritten Übertragungshebel 21 a, 21b auf jeweils den einander zugewandten Innenseiten der beiden innen liegenden Basis-Verbindungshebel 20a, 20b an diesen angekoppelt. Weiterhin ist bei dem dargestellten Ausführungsbeispiel jeweils ein vierter Übertragungshebel 25a, 25b zwischen jeweils zwei Basis-Verbindungshebeln 20a, 20b bzw. 20c, 20d gelegen.

Insbesondere kann vorgesehen sein, dass der zweite Übertragungshebel und der dritte Übertragungshebel an dem Basis-Verbindungshebel in derselben Lagerstelle gelagert sind, wie dies in den Figuren gezeigt ist.

Die dritten Übertragungshebel 21 a, 21 b sind mit jeweils einem zweiten Endabschnitt 23a bzw. 23b und die vierten Übertragungshebel 25a, 25b sind mit jeweils einem zweiten Endabschnitt 27a bzw. 27b an einen Stellhebel 30 angekoppelt. Dabei ist der Stellhebel 30 zwischen jeweils den beiden dritten Übertragungshebeln 21a, 21b und den beiden vierten Übertragungshebeln 25a, 25b gelegen. Der Stellhebel 40 ist dazu vorgesehen, dass mit einer Stellbewegung desselben der Hochauftriebskörper K verstellt wird.

Bei der gezeigten Ausführungsbeispiel mit jeweils zwei dritten Übertragungshebel 21a, 21 b und zwei vierten Übertragungshebeln 25a, 25b ist der Stellhebel 30 zwischen diesen gelegen, so dass dies Übertragungshebel an den jeweils entgegen gesetzt zueinander gelegenen Außenseiten des Stellhebels 30 an diesem angekoppelt sind.

Die zweiten Endabschnitte 23a bzw. 23b der dritten Übertragungshebel 21a, 21 b können an einem ersten Ende 31 des Stellhebels 30 an diesem angekoppelt sein. Weiterhin können die zweiten Endabschnitte 27a bzw. 27b der vierten Übertragungshebel 25a, 25b jeweils an einem mittleren Abschnitt 33 des Stellhebels 30 an diesem angekoppelt sein.

Bei dem in den Figuren dargestellten Ausführungsbeispiel der Erfindung ist der zumindest eine dritte Übertragungshebel 21a, 21b in der Längsrichtung L gesehen hinter dem zumindest einen ersten Übertragungshebel und ist der zumindest eine vierte Übertragungshebel 25a, 25b in der Längsrichtung L gesehen hinter dem zumindest einen zweiten Übertragungshebel gelegen. Zusätzlich kann vorgesehen sein, dass auch der zumindest eine dritte Übertragungshebel 21a, 21 b in der Längsrichtung L gesehen hinter dem zumindest einen zweiten Übertragungshebel 22a, 22b gelegen ist.

Erfindungsgemäß weist der Verstellmechanismus M einen Kopplungshebel 40 auf, an den der zumindest eine erste Übertragungshebel 11a, 11 b mit einem entgegen gesetzt zu dem ersten Endabschnitt gelegenen zweiten Endabschnitt 14a, 14b und der zumindest eine dritte Übertragungshebel 21a, 21b mit einem mittleren Abschnitt 24a bzw. 24b angekoppelt ist. Dabei die Anschlussstellen des Kopplungshebels 40 und des Basis-Verbindungshebels 20 an dem ersten Übertragungshebel 11a, 11b in dessen Längsrichtung gesehen voneinander beabstandet. Weiterhin sind die Anschlussstellen des Kopplungshebels 40 und des Basis-Verbindungshebels 20 an dem dritten Übertragungshebel 21a, 21b voneinander beabstandet, so dass durch den Kopplungshebel 40 und den Basis-Verbindungshebels 20 eine Zwangskopplung der Drehbewegungen der jeweiligen Übertragungshebel vorsehen.

Die Übertragungshebel oder weitern Hebel, wenn diese mehrfach ausgeführt sind, könne auch als miteinander fixierte oder einstückige Bauteile ausgeführt sein, wie dies wie diese an dem vierten Übertragungshebel 25 der Figur 4 zu sehen ist.

Erfindungsgemäß ist die Anordnung oder die Orientierung des jeweils zumindest einen ersten, zweiten, dritten und vierten Übertragungshebels derart vorgesehen ist, dass sich bei einer Bewegung des Stellhebels 30 der erste und der zweite Übertragungshebel jeweils gegensinnig zu dem dritten und vierten Übertragungshebel bewegt.

Die Verstellung oder Betätigung des Verstellmechanismus M ist eine Antriebsvorrichtung zur Bewegung des Verstellkörpers oder der Hochauftriebskörpers K vorgesehen. Die Antriebsvorrichtung kann derart ausgeführt und angeordnet sein, dass diese einen der Übertragungshebel oder einen der weiteren Hebel 20, 30, 40 bewegt, um eine Verstellbewegung des Verstellkörpers oder der Hochauftriebskörpers K zu bewirken.

Insbesondere kann die Antriebsvorrichtung zur Betätigung des Hochauftriebskörpers ein z.B. von einem im Rumpf des Flugzeugs angeordneten Antriebsmotor angetriebenen Drehaktuator sein, der am Hauptflügel angebracht ist und dessen Schwenkhebel an dem Hochauftriebskörper zur Betätigung des Hochauftriebskörpers angekoppelt ist. Der Schwenkhebel kann auch über einen Anschlusshebel an dem Hochauftriebskörper angekoppelt sein.

Bei dem nach einem weiteren Aspekt der Erfindung vorgesehenen Hochauftriebssystem eines Flugzeugs ist die Verstellvorrichtung aus zwei in der Spannweitenrichtung des Hauptflügels voneinander beabstandeten Verstellmechanismen M nach einer Ausführungsform der Erfindung gebildet. Dabei braucht nur eine Antriebsvorrichtung je Verstellvorrichtung vorgesehen sein.

Insbesondere kann vorgesehen sein, dass das Gelenk 34 zur Ankopplung des Stellhebels 30 an den Verstellkörper K am zweiten Ende 32 des Stellhebels 30 als sphärisches Gelenk ausgebildet ist. Dadurch werden Verspannungen oder innere Zwangskräfte vermieden, wenn zumindest zwei Verstellmechanismen M mit jeweils einem Stellhebel 30 an derselben Verstellkörper K angekoppelt sind.

Erfindungsgemäß ist also eine Zweifach-Vier-Hebel-Anordnung, d.h. eine Serie aus zwei Anordnungen aus jeweils vier relativ zueinander verstellbaren Teilen vorgesehen. Die erste Anordnung ist aus dem tragenden Strukturteil H1, H2, dem ersten Übertragungshebel 11, dem Basis-Verbindungshebel 20 und dem zweiten Übertragungshebel 15 und die zweite Anordnung ist aus dem Basis-Verbindungshebel 20, dem dritten Übertragungshebel 21, dem Stellhebel 30 und dem vierten Übertragungshebel 25 gebildet.

## Patentansprüche

1. Verstellmechanismus (M) zur kinematischen Verstellung eines Hochauftriebskörpers (K) bei dessen Verstellung an einem tragenden Strukturbauteil eines Hauptflügels, wobei der Hochauftriebskörper (K) zwischen einer eingefahrenen und einer ausgefahrenen Stellung unter Ausführung einer Bewegung entlang einer Längsrichtung (L) in Kombination mit einer Drehbewegung bewegbar ist, der Verstellmechanismus (M) aufweisend:
▪ einen ersten Übertragungshebel (11a, 11b) mit einem ersten Endabschnitt (12a, 12b) zur Ankopplung an dem Hauptflügel und einen in der Längsrichtung gesehen hinter dem ersten Übertragungshebel (11a, 11 b) gelegenen zweiten Übertragungshebel (15a, 15b) mit einem ersten Endabschnitt (16a, 16b) zur Ankopplung an dem tragenden Strukturteil,
▪ einen Basis-Verbindungshebel (20), an dem ein Zwischenabschnitt (13a, 13b) des ersten Übertragungshebels (11a, 11b) und ein zweiter Endabschnitt (17a, 17b) des zweiten Übertragungshebels (15a, 15b) angekoppelt sind,
▪ einen an dem Basis-Verbindungshebel (20) angekoppelten dritten Übertragungshebel (21 a, 21 b) und einen in der Längsrichtung gesehen hinter dem dritten Übertragungshebel (21 a, 21 b) gelegenen und an dem Basis-Verbindungshebel (20) mit einem ersten Endabschnitt (26a, 26b) angekoppelten vierten Übertragungshebel (25a, 25b),
▪ einen an einem zweiten Endabschnitt (23a, 23b) des dritten Übertragungshebels (21 a, 21 b) und einem zweiten Endabschnitt (27a, 27b) des vierten Übertragungshebels (25a, 25b) angekoppelten Stellhebel (30), der an den Hochauftriebskörper (K) ankoppelbar um mit einer Bewegung des Stellhebels (30) den Hochauftriebskörper zu verstellen,
▪ einen Kopplungshebel (40), der einerseits an dem ersten Übertragungshebel (11a, 11b) oder dem zweiten Übertragungshebel (15a, 15b) und andererseits an dem dritten Übertragungshebel (21 a, 21 b) oder dem vierten Übertragungshebel (25a, 25b) angekoppelt ist, wobei die Anschlussstellen des Kopplungshebels (40) und des Basis-Verbindungshebel (20) an dem ersten Übertragungshebel (11a, 11 b) oder dem zweiten Übertragungshebel (15a, 15b) voneinander beabstandet sind und die Anschlussstellen des Kopplungshebels und des Basis-Verbindungshebel (20) an dem dritten Übertragungshebel (21 a, 21 b) oder dem vierten Übertragungshebel (25a, 25b) voneinander beabstandet sind,
▪ eine Antriebsvorrichtung zur Betätigung des Hochauftriebskörpers (K) mit einem Antriebshebel (50), der über ein sphärisches Lager an dem Hochauftriebskörper (K) ankoppelbar ist,
wobei die Orientierung des ersten, zweiten, dritten und vierten Übertragungshebels derart vorgesehen ist, dass sich bei einer Bewegung des Stellhebels (30) der erste (11a, 11b) und der zweite Übertragungshebel (15a, 15b) jeweils gegensinnig zu dem dritten (21a, 21b) und vierten Übertragungshebel (25a, 25b) bewegt.

2. Verstellmechanismus (M) nach dem Anspruch 1, **dadurch gekennzeichnet, dass** der zweite Übertragungshebel (15a, 15b) und der dritte Übertragungshebel (21a, 21b) an dem Basis-Verbindungshebel (20) in derselben Lagerstelle gelagert sind.

3. Verstellmechanismus (M) nach einem der Ansprüche 1 oder 2, **dadurch gekennzeichnet, dass** der Hochauftriebskörper (K) eine Hinterkantenklappe ist.

4. Verstellmechanismus (M) nach einem der Ansprüche 1 oder 2, **dadurch gekennzeichnet, dass** der Hochauftriebskörper (K) eine Vorderkantenklappe ist.

5. Verstellmechanismus (M) nach einem der voranstehenden Ansprüche, **dadurch gekennzeichnet, dass** die Antriebsvorrichtung zur Betätigung des Hochauftriebskörpers ein Drehaktuator ist, der am Hauptflügel angebracht ist und dessen Schwenkhebel an dem Hochauftriebskörper (K) zur Betätigung des Hochauftriebskörpers angekoppelt ist.

6. Verstellmechanismus (M) nach dem Anspruch 9, **dadurch gekennzeichnet, dass** der Schwenkhebel über einen Anschlusshebel (50) an dem Hochauftriebskörper (K) angekoppelt ist.

7. Verstellmechanismus (M) nach einem der voranstehenden Ansprüche, **dadurch gekennzeichnet, dass** der dritte Übertragungshebel (21 a, 21 b) in der Längsrichtung gesehen hinter dem ersten Übertragungshebel (11 a, 11 b) und der vierte Übertragungshebel (25a, 25b) in der Längsrichtung gesehen hinter dem zweiten Übertragungshebel (15a, 15b) gelegen ist.

8. Hochauftriebssystem eines Flugzeugs mit einem Hauptflügel und mittels einem Verstellvorrichtung an diesem angeordneten und gegenüber diesem verstellbaren Hochauftriebskörpers (K), **dadurch gekennzeichnet, dass** die Verstellvorrichtung aus zwei in der Spannweitenrichtung des Hauptflügels voneinander beabstandeten Verstellmechanismen (M) nach einem der Ansprüche 4 bis 11 gebildet ist.

9. Hochauftriebssystem nach dem Anspruch 8, **dadurch gekennzeichnet, dass** bei einem der Verstellmechanismen der Stellhebel (30) über ein sphärisches Drehgelenk an dem Hochauftriebskörper (K) angekoppelt ist und bei dem zumindest einen weiteren Verstellmechanismus der Stellhebel (30) über ein Drehgelenk mit einer festliegenden Drehachse am Hochaüftriebskörper angelenkt ist.

## Claims

1. An adjusting mechanism (M) for kinematically adjusting a vertically lifting body (K) during the adjustment thereof on a supporting structural component of a main wing, wherein the vertically lifting body (K) can be moved between a retracted and an extended position by executing a movement along a longitudinal direction (L) in combination with a rotational movement, the adjusting mechanism (M) comprising:
▪ a first transmission lever (11 a, 11 b) with a first end section (12a, 12b) for coupling to the main wing and a second transmission lever (15a, 15b), which lies behind the first transmission lever (11 a, 11 b) when viewed in the longitudinal direction, with a first end section (16a, 16b) for coupling to the supporting structural component,
▪ a base connecting lever (20), to which an intermediate section (13a, 13b) of the first transmission lever (11 a, 11 b) and a second end section (17a, 17b) of the second transmission lever (15a, 15b) are coupled,
▪ a third transmission lever (21a, 21b) coupled to the base connecting lever (20) and a fourth transmission lever (25a, 25b), which lies behind the third transmission lever (21 a, 21 b) when viewed in the longitudinal direction and which is coupled to the base connecting lever (20) with a first end section (26a, 26b),
▪ an adjusting lever (30) coupled to a second end section (23a, 23b) of the third transmission lever (21a, 21b) and to a second end section (27a, 27b) of the fourth transmission lever (25a, 25b), which adjusting lever can be coupled to the vertically lifting body (K) in order to adjust the vertically lifting body (K) with a movement of the adjusting lever (30),
▪ a coupling lever (40), which is coupled on the one hand to the first transmission lever (11 a, 11 b) or the second transmission lever (15a, 15b) and on the other hand to the third transmission lever (21 a, 21 b) or the fourth transmission lever (25a, 25b), wherein the connection points of the coupling lever (40) and of the base connecting lever (20) at the first transmission lever (11 a, 11 b) or the second transmission lever (15a, 15b) are spaced apart from one another and the connection points of the coupling lever and of the base connecting lever (20) at the third transmission lever (21 a, 21 b) or the fourth transmission lever (25a, 25b) are spaced apart from one another,
▪ a driving device for activating the vertically lifting body (K) with a driving lever (50), which can be coupled to the vertically lifting body (K) by means of a spherical bearing,
wherein the orientation of the first, second, third and fourth transmission lever is such that, when there is a movement of the adjusting lever (30), the first (11 a, 11 b) and the second transmission levers (15a, 15b) each move in the opposite direction to the third (21 a, 21 b) and fourth transmission levers (25a, 25b).

2. The adjusting mechanism (M) according to Claim 1, **characterized in that** the second transmission lever (15a, 15b) and the third transmission lever (21 a, 21b) at the base connecting lever (20) are stored in the same storage location.

3. The adjusting mechanism (M) according to one of Claims 1 or 2, **characterized in that** the vertically lifting body (K) is a trailing edge flap.

4. The adjusting mechanism (M) according to one of Claims 1 or 2, **characterized in that** the vertically lifting body (K) is a leading edge flap.

5. The adjusting mechanism (M) according to one of the preceding claims, **characterized in that** the driving device for actuating the vertically lifting body is a rotary actuator, which is mounted on the main wing and the swiveling lever of which is coupled to the vertically lifting body (K) for actuation of the vertically lifting body.

6. The adjusting mechanism (M) according to Claim 9, **characterized in that** the swiveling lever is coupled to the vertically lifting body (K) via a connection lever (50).

7. The adjusting mechanism (M) according to one of the preceding claims, **characterized in that** the third transmission lever (21 a, 21 b) lies behind the first transmission lever (11 a, 11 b) when viewed in the longitudinal direction and the fourth transmission lever (25a, 25b) lies behind the second transmission lever (15a, 15b) when viewed in the longitudinal direction.

8. A vertical lifting system of an aircraft with a main wing and a vertically lifting body (K) which is arranged on same by means of an adjusting device and which is adjustable relative thereto, **characterized in that** the adjusting device is formed by two adjusting mechanisms (M) according to one of Claims 4 through 11 which are spaced apart from one another in the wingspan direction of the main wing.

9. The vertical lifting system according to Claim 8, **characterized in that**, in the case of one of the adjusting mechanisms, the adjusting lever (30) is coupled to the vertically lifting body (K) via a spherical pivot joint and, in the case of the at least one other adjusting mechanism, the adjusting lever (30) is linked to the vertically lifting body via a pivot joint with a fixed axis of rotation.

## Revendications

1. Mécanisme de réglage (M) destiné au réglage cinématique d'un corps hypersustentateur (K) lors de son réglage sur un élément structural porteur d'une aile principale :
le corps hypersustentateur (K) pouvant se déplacer entre une position déployée et une position rétractée pendant la réalisation d'un mouvement le long d'une direction longitudinale (L) en association avec un mouvement de rotation, ledit mécanisme de réglage (M) comprenant :
▪ un premier levier de transfert (11 a, 11 b) ayant une première partie d'extrémité (12an 12b) permettant l'accouplement sur l'aile principale et un deuxième levier de transfert (15a, 15b) disposé derrière le premier levier de transfert (11 a, 11 b) lorsqu'il est observé dans la direction longitudinale, ayant une première partie d'extrémité (16a, 16b) permettant l'accouplement sur la partie structurale porteuse,
▪ un levier de liaison de base (20) sur lequel une partie intermédiaire (13a, 13b) du premier levier de transfert (11a, 11b) et une seconde partie d'extrémité (17a, 17b) du deuxième levier de transfert (15a, 15b) sont accouplées,
▪ un troisième levier de transfert (21 a, 21 b) accouplé sur le levier de liaison de base (20) et un quatrième levier de transfert (25a, 25b) derrière le troisième levier de transmission (21 a, 21 b) lorsqu'il est observé dans la direction longitudinale et accouplé sur le levier de liaison (20) de base ayant une première partie d'extrémité (26a, 26b),
▪ un levier de réglage (30) accouplé sur une seconde partie d'extrémité (23a, 23b) du troisième levier de transfert (21 a, 21 b) et sur une seconde partie d'extrémité (27a, 27b) du quatrième levier de transfert (25a, 25b) qui peut s'accoupler sur le corps hypersustentateur (K) pour déplacer le corps hypersustentateur au moyen d'un mouvement du levier de réglage (30),
▪ un levier d'accouplement (40) qui d'une part est accouplé au premier levier de transfert (11a, 11b) ou au deuxième levier de transfert (15a, 15b) et d'autre part au troisième levier de transfert (21a, 21b) ou au quatrième levier de transfert (25a, 25b), les points de raccordement du levier d'accouplement (40) et du levier de liaison de base (20) étant éloignés sur le premier levier de transfert (11a, 11b) ou sur le deuxième levier de transfert (15a, 15b) les uns des autres et les points de raccordement du levier d'accouplement et du levier de liaison de base (20) étant éloignés sur le troisième levier de transfert (21a, 21b) ou sur le quatrième levier de transfert (25a, 25b) les uns des autres,
▪ un dispositif d'entraînement permettant d'actionner le corps hypersustentateur (K) au moyen d'un levier d'entraînement (50) qui peut s'accoupler avec le corps hypersustentateur (K) au moyen d'un palier sphérique,
l'orientation des premier, deuxième, troisième et quatrième leviers de transfert étant prévue de telle sorte que lors d'un mouvement du levier de réglage (30) les premier (11 a, 11 b) et deuxième leviers de transfert (15a, 15b) se déplacent respectivement en sens contraire par rapport au troisième (21 a, 21 b) et au quatrième levier de transfert (25a, 25b).

2. Mécanisme de réglage (M) selon la revendication 1, **caractérisé en ce que** le deuxième levier de transfert (15a, 15b) et le troisième levier de transfert (21 a, 21b) sont montés au même endroit sur le levier de liaison de base (20).

3. Mécanisme de réglage (M) selon l'une quelconque des revendications 1 ou 2, **caractérisé en ce que** le corps hypersustentateur (K) est un volet de bord de fuite.

4. Mécanisme de réglage (M) selon l'une quelconque des revendications 1 ou 2, **caractérisé en ce que** le corps hypersustentateur (K) est une brisure de bord d'attaque.

5. Mécanisme de réglage (M) selon l'une quelconque des revendications précédentes, **caractérisé en ce que** le dispositif d'entraînement permettant d'actionner le corps hypersustentateur (K) est un actionneur rotatif, qui est placé sur l'aile principale et son levier oscillant est accouplé au corps hypersustentateur (K) pour actionner le corps hypersustentateur.

6. Mécanisme de réglage (M) selon la revendication 9, caractérisé en e que le levier oscillant est accouplé au corps hypersustentateur (K) au moyen d'un levier de raccordement (50).

7. Mécanisme de réglage (M) selon l'une quelconque des revendications précédentes, **caractérisé en ce que** le troisième levier de transfert (21 a, 21b) lorsqu'il est observé dans la direction longitudinale, est disposé derrière le premier levier de transfert (11a, 11b) et le quatrième levier de transfert (25a, 25b) lorsqu'il est observé dans la direction longitudinale, est disposé derrière le deuxième levier de transfert (15a, 15b).

8. Système hypersustentateur d'un aéronef comprenant une aile principale et corps hypersustentateur (K) pouvant être réglé par rapport à celle-ci et disposée sur celle-ci au moyen d'un dispositif de réglage, **caractérisé en ce que** le dispositif de réglage est constitué de deux mécanismes de réglage (M) éloignés l'un de l'autre dans la direction d'envergure de l'aile principale selon l'une quelconque des revendications 4 à 11.

9. Système hypersustentateur selon la revendication 8, **caractérisé en ce que** pour un des mécanismes de réglage le levier de réglage (30) est couplé au corps hypersustentateur (K) au moyen d'une liaison articulée sphérique et pour l'au moins un autre mécanisme de réglage le levier de réglage (30) est relié au moyen d'une liaison articulée ayant un axe de rotation fixe sur le corps hypersustentateur.
